# EUROPEAN PATENT APPLICATION

(11) **EP 4 456 291 A1**
(43) Date of publication of application: **30.10.2024**
(21) Application number: 22911768.4
(22) Date of filing: 15.12.2022
(51) Int. Cl.: H01M 50/242, H01M 10/6554, H01M 10/613, H01M 10/6556, H01M 50/249, H01M 10/625

(54) **BATTERY CASE**

(30) Priority: 20.12.2021 KR 20210183152
(71) Applicant: POSCO Co., Ltd, Pohang-si, Gyeongsangbuk-do 37859 (KR)
(72) Inventor: LEE, Hong-Woo, Incheon 21985 (KR); KIM, Hwi-Geon, Incheon 21985 (KR)
(74) Representative: Meissner Bolte Partnerschaft mbB
(86) International application number: PCT/KR2022/020398
(87) International publication number: WO 2023/121135

(57) **Abstract**

The present invention provides a battery case comprising: a side frame; longitudinal members which are arranged inside the side frame and extend in the longitudinal direction; width-direction members which are arranged inside the side frame and extend in the width-direction so as to be connected crosswise with the longitudinal members, and which each include a first lower width-direction unit and a second lower width-direction unit that are arranged overlapping in the height direction; and a cooling panel which is arranged above the first lower width-direction units and cools a battery module.

## Description

### Technical Field

The present disclosure relates to a battery case.

### Background Art

It should be noted that the description in this section simply provides background information on the present invention and is not included in the prior art.

The production and sales of a battery electric vehicle (hereinafter, referred to as an electric vehicle) using the electrical energy of a battery as a driving source have continuously expanded as a means of addressing environmental problems of internal combustion engine vehicles.

As sales of electric vehicles are expected to increase, there has been a trend to introduce a platform specifically for an electric vehicle, which is different from the platform structure commonly used for internal combustion engine vehicles. The main purpose of introducing a dedicated platform is that a new structure is necessary to mount a battery of sufficient capacity to extend driving range.

To this end, a lower space for mounting a high-capacity battery may need to be secured in the vehicle, and accordingly, a space for absorbing collision energy may be reduced. A structure for reinforcing an underbody of the vehicle may be necessary to absorb collision energy in a narrow space, and also in the battery, a reinforcing structure may be necessary to prevent damage to a battery cell by blocking external impact loads.

The reinforcing structure may include a longitudinal member which may prevent front and rear collision loads and a width-direction member which may prevent collision loads in a width direction. Generally, in order to effectively prevent collision loads, connection with a corresponding member may need to be good, and generally, a longitudinal member and a width-direction member may need to be welded.

The battery module may be assembled in a compartment divided by the longitudinal member and the width-direction member and may be protected from external impacts.

### (Cited document 1) KR 20-0193173 Y1

### Detailed description of present disclosure

### Technical problems to solve

An aspect of the present disclosure is to provide a battery case which may efficiently respond to collision loads.

An aspect of the present disclosure is to provide a battery case which may improve production efficiency by reducing component changes and may easily change a size thereof.

### Solution to Problem

An aspect of the present disclosure provides a battery case including a side frame; a longitudinal member disposed in the side frame and extending in a length direction; a width-direction member disposed in the side frame, extending in a width direction, connected to intersect with the longitudinal member, and including a first lower width-direction unit and a second lower width-direction unit disposed to overlap each other in a height direction; and a cooling panel disposed on an upper side of the first lower width-direction unit and cooling the battery module.

An aspect of the present disclosure provides a battery case including a side frame; a longitudinal member extending in the side frame in a length direction; and a width-direction member extending in the side frame in a width direction and connected to intersect with the longitudinal member, wherein the longitudinal member includes a lower longitudinal unit disposed on a lower side; and an upper longitudinal unit including a plurality of first variable units having different heights, wherein at least one of the plurality of first variable units is coupled to an upper side of the lower longitudinal unit.

The width-direction member connects adjacent longitudinal members to each other or connects the longitudinal member to the side frame.

The battery case may further include a first lower width-direction unit and a second lower width-direction unit disposed to overlap each other in a height direction; and a cooling panel disposed on an upper side of the first lower width-direction unit and cooling the battery module.

The first lower width-direction unit may be disposed on a lower side of the cooling panel and has a form bead through which the cooling panel penetrates, and the second lower width-direction unit is disposed on an upper side of the cooling panel and is coupled to the first lower width-direction unit.

The first lower width-direction unit may have a hat-shaped cross-section having an open lower portion, and a lower side thereof is coupled to a bottom plate and forms a closed cross-section with a bottom plate.

The width-direction member may further include an upper width-direction unit coupled to an upper side of the second lower width-direction unit and coupled to the longitudinal member by a connection bracket.

The longitudinal member may include a lower longitudinal unit having a hat-shaped cross-section having an open lower portion, and a lower side coupled to a bottom plate and forming a closed cross-section with the bottom plate; and an upper longitudinal unit coupled to an upper side of the lower longitudinal unit and forming a closed cross-section.

The battery case may further include a cross-section reinforcing member installed in the longitudinal member, disposed at a connection point to which the width-direction member is connected, and supporting a width-direction internal surface of the longitudinal member.

The cross-section reinforcing member may be installed in the longitudinal member disposed between the adjacent width-direction members spaced apart from each other in the width direction, and may include a reinforcing bulkhead supporting the adjacent width-direction members.

The reinforcing bulkhead and the width-direction member may have cross-sections having shapes of which at least portions correspond to each other.

The width-direction member may be coupled to the longitudinal member by a connection bracket, and the cross-section reinforcing member may be installed in the longitudinal member disposed between the adjacent connection brackets spaced apart from each other in the width direction, and may include a tubular reinforcing sleeve supporting the adjacent connection brackets.

In the cooling panel, unit cooling panels may be respectively disposed in unit spaces formed between the adjacent longitudinal members spaced apart from each other in the width direction or formed between the longitudinal unit and the side frame spaced apart from each other in the width direction.

The unit cooling panel may include a single member installed throughout the plurality of width-direction members spaced apart from each other in the length direction in the side frame.

The unit cooling panel may include a plurality of cooling module plates installed and spaced apart from each other in the length direction and cooling the battery module; and a connection module plate connecting the adjacent cooling module plates to each other.

The cooling module plate may be disposed between the adjacent width-direction members spaced apart from each other in the length direction and may cool the battery module, and the connection module plate may be installed with a width smaller than that of the cooling module plate and may be disposed throughout in a region between the first lower width-direction unit of the width-direction member and the second lower width-direction unit of the width-direction member.

The width-direction member may include a lower width-direction unit disposed on a lower side; and an upper width-direction unit including a plurality of second variable units having different heights, wherein at least one of the plurality of second variable units may be coupled to an upper side of the lower width-direction unit.

The lower longitudinal unit may have a hat-shaped cross-section having an open lower portion, and a lower side thereof may be coupled to a bottom plate and form a closed cross-section with the bottom plate, and in the upper longitudinal unit, the first variable unit selected from among the plurality of first variable units may be coupled to an upper side of the lower longitudinal unit and forms a closed cross-section.

The width-direction member may further include an upper width-direction unit coupled to an upper side of the second lower width-direction unit, and including a plurality of second variable units having different heights, where at least one of the plurality of second variable units may be coupled to an upper side of the lower width-direction unit, and the upper width-direction unit may be coupled to the longitudinal member by a connection bracket.

### Advantageous Effects of Invention

According to an aspect of the present disclosure, there may be the effect of efficiently responding to collision loads.

Also, according to another aspect of the present disclosure, production efficiency may be improved by reducing component changes in a battery case, and a size of the battery case may be easily changed.

### Brief Description of Drawings

FIG. 1 is a perspective diagram illustrating a battery case according to an embodiment of the present invention.
FIG. 2 is a diagram illustrating a width-direction member in which a plurality of width-direction units are coupled to each other in a height direction, and a cooling panel.
FIG. 3 is a cross-sectional diagram in the direction I-I' in FIG. 2.
FIG. 4 is a cross-sectional diagram in the direction II-II' in FIG. 2.
FIG. 5 is a diagram illustrating a state in which a cooling panel is installed on an upper side of a first lower width-direction unit.
FIG. 6 is a diagram illustrating details of a portion in which a width-direction member is coupled to a longitudinal member.
FIG. 7 is a diagram illustrating an embodiment in which a cross-section reinforcing member of a battery case in the present invention is installed.
FIG. 8 is a diagram illustrating another embodiment in which a cross-section reinforcing member of a battery case in the present invention is installed.
FIG. 9 is a diagram illustrating another embodiment in which a cross-section reinforcing member of a battery case in the present invention is installed.
FIG. 10 is a diagram illustrating a cooling plate of a battery case of a comparative example as compared to a battery case in the present invention.
FIG. 11 is a diagram illustrating a cooling panel of a battery case according to an embodiment of the present invention as compared to the comparative example in FIG. 10.
FIG. 12 is a diagram illustrating a state in which an upper width-direction unit is additionally installed in FIG. 11.
FIG. 13 is a diagram illustrating a state in which a battery module is installed between a longitudinal member and a width-direction member in FIG. 12.
FIG. 14 is a perspective diagram illustrating a battery case according to another embodiment of the present invention.
FIG. 15 is a plan diagram illustrating a small-sized battery case and a large-sized battery case.
FIG. 16 is a cross-sectional diagram illustrating a longitudinal member including an upper longitudinal unit in which a plurality of first variable units are replaced.
FIG. 17 is a diagram illustrating an example to which FIG. 3 is applied.
FIG. 18 is a cross-sectional diagram illustrating a width-direction member including an upper width-direction unit in which a plurality of second variable units are replaced.
FIG. 19 is a diagram illustrating an example to which FIG. 18 is applied.
FIG. 20 is a diagram illustrating an embodiment in which a cross-section reinforcing member of a battery case in the present invention is installed.
FIG. 21 is a diagram illustrating another embodiment in which a cross-section reinforcing member of a battery case in the present invention is installed.
FIG. 22 is a diagram illustrating another embodiment in which a cross-section reinforcing member of a battery case in the present invention is installed.
FIG. 23 is a diagram illustrating a width-direction member and a cooling panel in which a plurality of width-direction units are coupled to each other in a height direction.
FIG. 24 is a cross-sectional diagram in the direction I-I' in FIG. 23.
FIG. 25 is a cross-sectional diagram in the direction II-II' in FIG. 23.
FIG. 26 is a diagram illustrating a state in which a cooling panel is installed on an upper side of a first lower width-direction unit.
FIG. 27 is a diagram illustrating details of a portion in which a width-direction member is coupled to a longitudinal member.
FIG. 28 is a diagram illustrating a cooling plate of a battery case of a comparative example as compared to a battery case in the present invention.
FIG. 29 is a diagram illustrating a cooling panel of a battery case according to an embodiment of the present invention as compared to the comparative example in FIG. 28.
FIG. 30 is a diagram illustrating a state in which an upper width-direction unit is additionally installed in FIG. 29.
FIG. 31 is a diagram illustrating a state in which a battery module is installed between the longitudinal member and the width-direction member in FIG. 30.

### Best Mode for Invention

Hereinafter, preferable embodiments of the present invention will be described with reference to the accompanied diagrams. However, the embodiment of the present invention may be modified into various different embodiments, and the scope in the present invention is not limited to the embodiments described below. Also, the embodiment of the present invention is provided to describe the present invention more completely to those having ordinary skill in the relevant technical field. The shape and size of elements in the diagrams may be exaggerated for clearer description.

Referring to the diagram, the battery case in the present invention is illustrated in a width direction, a height direction, and a length direction, and the terms width direction, height direction, and length direction are used in the detailed description of the invention, which is for ease of description, and the technical features of the battery case of the present invention are not limited to these directions.

Hereinafter, the X-axis illustrated in the attached diagram is the length direction of the battery case, the Y-axis is the width direction of the battery case, and the Z-axis is the height direction of the battery case.

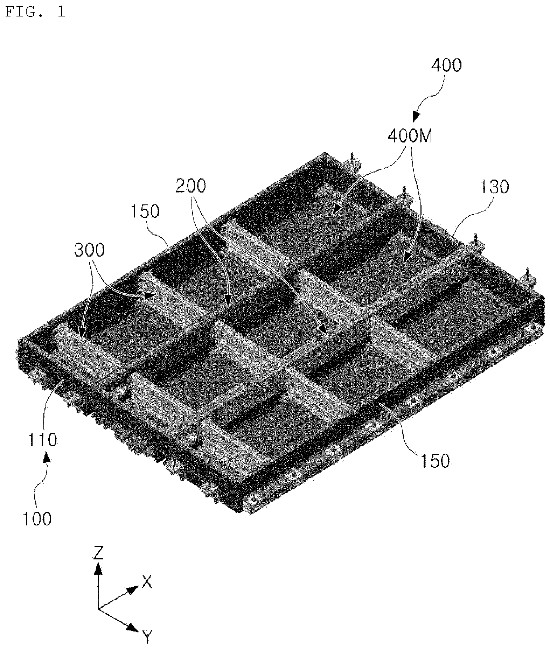

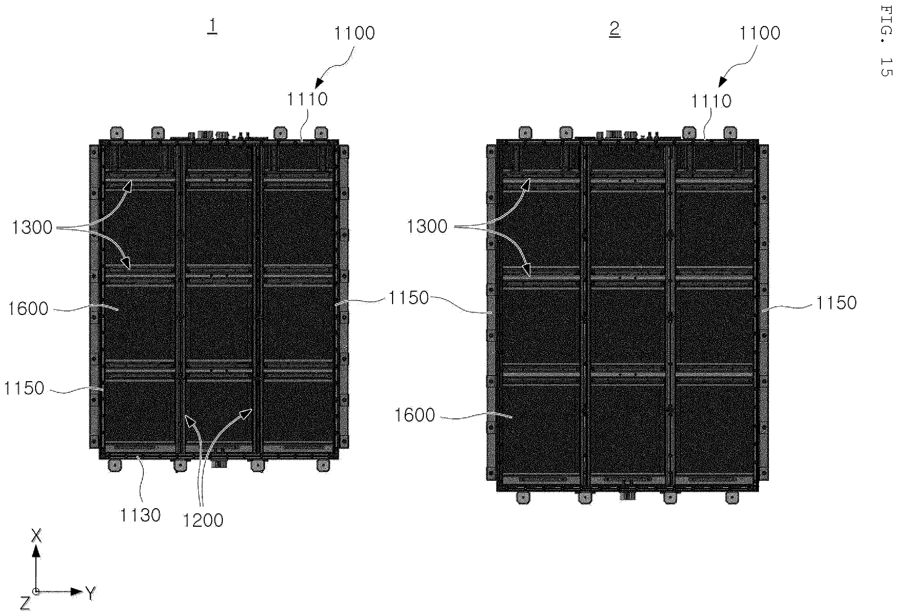

FIGS. 1 to 14 are diagrams related to a battery case according to an embodiment of the present invention, and FIGS. 15 to 31 are diagrams related to a battery case according to another embodiment of the present invention.

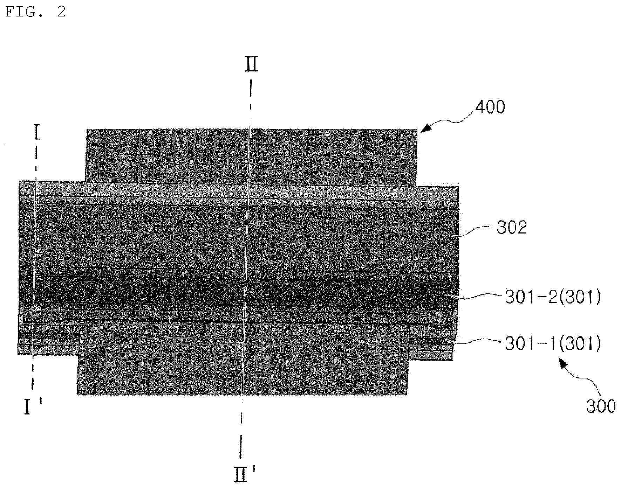

Hereinafter, the components included in the battery case according to an embodiment of the present invention will be described in detail with reference to FIGS. 1 and 2.

FIG. 1 is a perspective diagram illustrating a battery case according to an embodiment of the present invention. FIG. 2 is a diagram illustrating a width-direction member 300 in which a plurality of width-direction units are coupled to each other in a height direction, and a cooling panel 400.

A battery case according to an embodiment of the present invention may include a side frame 100, a longitudinal member 200, a width-direction member 300, and a cooling panel 400.

The side frame 100 may be installed to surround a side surface. For example, the internal portion of the side frame 100 may have a hollow quadrangular shape on a plane, and the width-direction member 300, the longitudinal member 200, and the cooling panel 400 may be disposed in the side frame 100.

The longitudinal member 200 may extend in the length direction in the side frame 100 and may be installed throughout the internal portion of the side frame 100. The longitudinal member 200 may extend in the length direction, and a plurality of longitudinal members 200 may be spaced apart from each other in the width direction.

The longitudinal member 200 may be installed in the side frame 100 and may extend in the length direction such that both ends may be connected to the side frame 100. For example, the longitudinal member 200 may support the front frame 110 and the rear frame 130 opposing the side frame 100. For example, in the side frame 100, two longitudinal members 200 may be spaced apart from each other in the width direction.

The width-direction member 300 may extend in the width direction in the side frame 100 and may be connected to intersect with the longitudinal member 200, and may include a first lower width-direction unit 301-1 and a second lower width-direction disposed overlapping in the height direction.

The width-direction member 300 may be installed in the side frame 100, may extend in the width direction, and a plurality of width-direction members 300 may be installed spaced apart from each other in the length direction.

A plurality of width-direction units may be coupled to each other in the height direction, and the cooling panel 400 may be installed by penetrating a region between adjacent width-direction units coupled to each other in the height direction.

Each of the width-direction units may have components such as a second upper plate 310, a second side plate 330, and a second lower plate 350. The first lower width-direction unit 301-1, the second lower width-direction unit 301-2, and the upper width-direction unit 302, which will be described later, may have components such as the second upper plate 310, the second side plate 330, and the second lower plate 350, respectively.

The cooling panel 400 may be installed through adjacent width-direction units coupled to each other in the height direction and may cool a battery module C.

The width-direction member 300 may connect adjacent longitudinal members 200 to each other or may connect the longitudinal member 200 to the side frame 100.

The width-direction member 300 may support the adj acent longitudinal members 200, or may support the longitudinal member 200 and the side-surface frame 150 of the side frame 100.

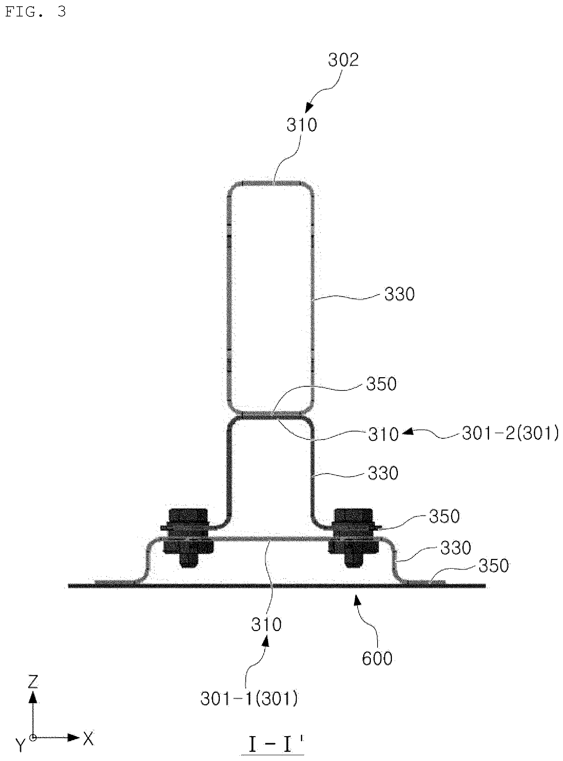

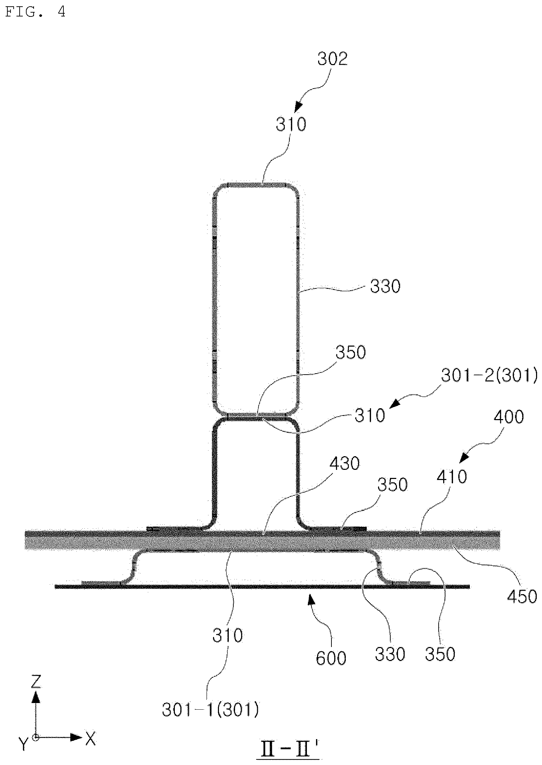

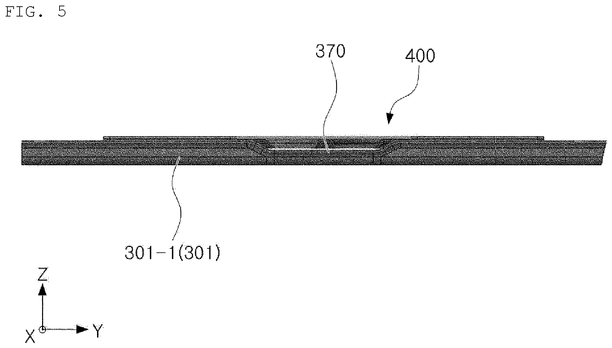

FIG. 3 is a cross-sectional diagram in the direction I-I' in FIG. 2. FIG. 4 is a cross-sectional diagram in the direction II-II' in FIG. 2. FIG. 5 is a diagram illustrating a state in which a cooling panel is installed on an upper side of a first lower width-direction unit.

The width-direction member 300 may include a first lower width-direction unit 301-1 and a second lower width-direction unit 301-2.

The first lower width-direction unit 301-1 may include a form bead 370 disposed on a lower side of cooling panel 400 and penetrated by the cooling panel 400.

The lower side of the first lower width-direction unit 301-1 may be coupled to the bottom plate 600, and the cooling panel 400 may be disposed on the form bead 370 formed on an upper side.

The first lower width-direction unit 301-1 may include a second upper plate 310, a pair of second side plates 330, and a pair of second lower plates 350. For example, the second lower plate 350 may be coupled to the bottom plate 600 by welding. In the first lower width-direction unit 301-1, the second upper plate 310, a pair of second side plates 330, and a pair of second lower plates 350 may form a hat-shaped cross-section.

The second lower width-direction unit 301-2 may be disposed on an upper side of the cooling panel 400 and may be coupled to the first lower width-direction unit 301-1.

Referring to FIG. 3, in a portion in which the cooling panel 400 is not disposed, the second lower width-direction unit 301-2 and the first lower width-direction unit 301-1 may be coupled to each other by a method such as coupling by bolts.

Referring to FIG. 4, the second lower width-direction unit 301-2 may be disposed on an upper side of the first lower width-direction unit 301-1 with the cooling panel 400 interposed therebetween, and the first lower width-direction unit 301-1, the cooling panel 400, and the second lower width-direction unit 301-2 may be connected to each other by bolts.

The second lower width-direction unit 301-2 may include a second upper plate 310, a pair of second side plates 330, and a pair of second lower plates 350. For example, the second lower plate 350 may be coupled to the second upper plate 310 of the first lower width-direction unit 301-1 by a method such as coupling by bolts. In the second lower width-direction unit 301-2, the second upper plate 310, a pair of second side plates 330, and a pair of second lower plates 350 may form a hat-shaped cross-section.

The first lower width-direction unit 301-1 may have a hat-shaped cross-section with an open lower portion, the lower side may be coupled to the bottom plate 600 and may form a closed cross-section with the bottom plate 600, and the first lower width-direction unit 301-1 may have a form bead 370 through which the cooling panel 400 penetrates on an upper side.

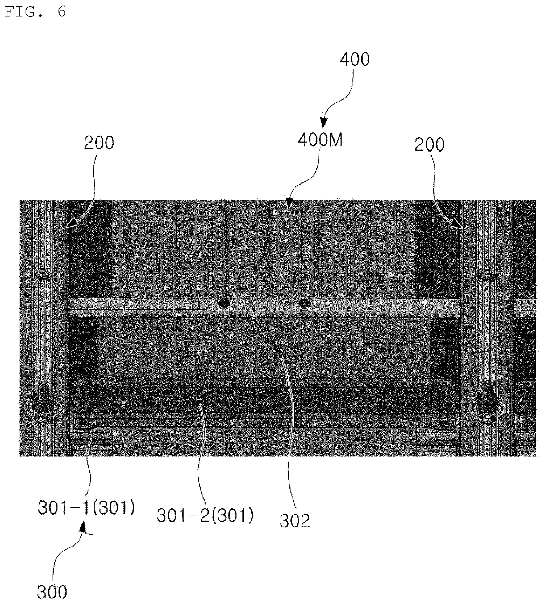

FIG. 6 is a diagram illustrating details of a portion in which a width-direction member is coupled to a longitudinal member.

The width-direction member 300 may further include an upper width-direction unit 302. The upper width-direction unit 302 may be coupled to the upper side of the second lower width-direction unit 301-2 and may be coupled to the longitudinal member 200 by a connection bracket B.

The upper width-direction unit 302 may be coupled to an upper side of the second lower width-direction unit 301-2, and although not illustrated, depending on the size of the battery case, the plurality of upper width-direction unit 302 may be stacked on and coupled to an upper side of the second lower width-direction unit 301-2 in the height direction.

The upper width-direction unit 302 may include a second upper plate 310, a pair of second side plates 330, and a pair of second lower plates 350. In the upper width-direction unit 302, the second upper plate 310, a pair of the second side plates 330, and a pair of the second lower plates 350 may form a cross-section having a quadrangular shape.

For example, the second lower plate 350 may be coupled to the second upper plate 310 of the second lower width-direction unit 301-2 by a method such as coupling by welding.

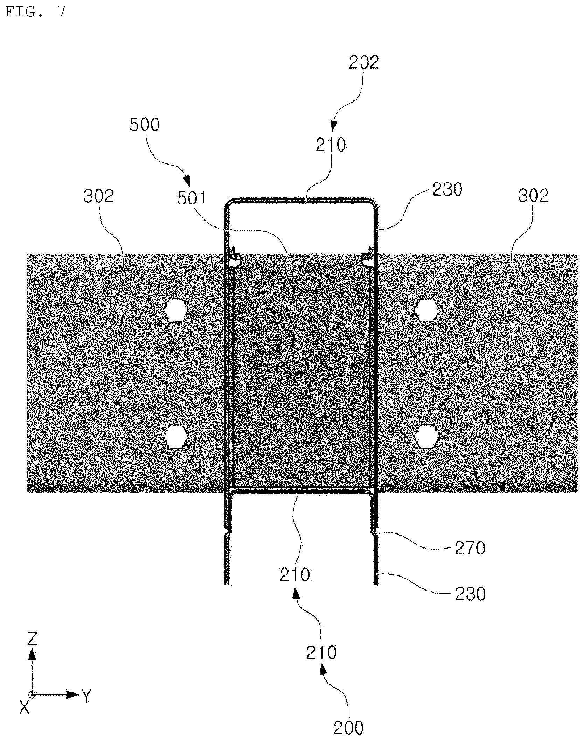

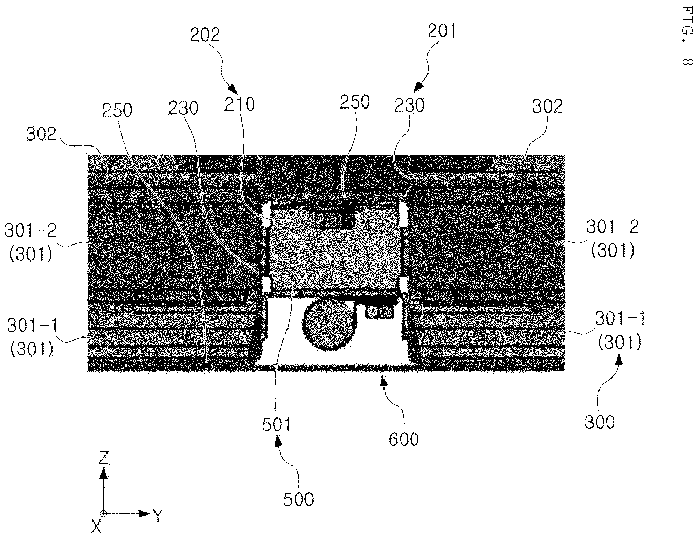

FIG. 7 is a diagram illustrating an embodiment in which a cross-section reinforcing member of a battery case in the present invention is installed. FIG. 8 is a diagram illustrating another embodiment in which a cross-section reinforcing member of a battery case in the present invention is installed.

The longitudinal member 200 may include a lower longitudinal unit 201 and an upper longitudinal unit 202.

The upper longitudinal unit may be coupled to an upper side of the lower longitudinal unit 201 and may form a closed cross-section together.

The lower longitudinal unit 201 may have a hat-shaped cross-section having an open lower portion, and the lower side may be coupled to the bottom plate 600 and may form a closed cross-section with the bottom plate 600.

The upper longitudinal unit 202 may include a 'C shaped' member having an open lower portion, and the open portion may be inserted into and coupled to an upper side of the lower longitudinal unit 201. In this case, a recessed step 270 into which the lower portion of the upper longitudinal unit 202 is inserted may be formed on an upper side of the lower longitudinal unit 201. For example, a lower end portion of the upper longitudinal unit 202 may be mounted on the recessed step 270 of the lower longitudinal unit 201, and the upper longitudinal unit 202 and the lower longitudinal unit 201 may be coupled to each other by welding.

Each of the longitudinal units may have components such as a first upper plate 210, a first side plate 230, and a first lower plate 250. The upper longitudinal unit 202 and the lower longitudinal unit 201, which will be described later, may have components such as the first upper plate 210, the first side plate 230, and the first lower plate 250, respectively.

The battery case may further include cross-section reinforcing member 500.

The cross-section reinforcing member 500 may be installed in the longitudinal member 200, may be disposed at a connection point at which the width-direction member 300 is connected, and may support the width-direction internal surface of the longitudinal member 200.

The cross-section reinforcing member 500 may be configured to support two width-direction internal surfaces of the longitudinal member 200.

The longitudinal member 200 may extend in the length direction, and a hollow portion may be formed therein. The longitudinal member 200 may have a hollow portion, which may be advantageous for reducing weight, but buckling may occur due to an impact load in the width direction, and the cross-section reinforcing member 500 may reinforce the component.

The cross-section reinforcing member 500 may be installed in the longitudinal member 200 disposed between adjacent width-direction members 300, spaced apart from each other in the width direction, and may include a reinforcing bulkhead 501 supporting the adjacent width-direction member 300.

The reinforcing bulkhead 501 may assure continuity of the cross-section in the width direction between two width-direction members 300 spaced apart from each other in the width direction. The longitudinal member 200 including the reinforcing bulkhead 501 installed therein may be disposed between two width-direction members 300 spaced apart from each other in the width direction.

The reinforcing bulkhead 501 and the width-direction member 300 may be disposed with the first side plate 230 of the longitudinal member 200 interposed therebetween. The reinforcing bulkhead 501 may be coupled to an internal surface of the first side plate 230 of the longitudinal member 200, and the width-direction member 300 may be coupled to the internal surface of the first side plate 230 of the longitudinal member 200 corresponding to a position to which the reinforcing bulkhead 501 is coupled. For example, the reinforcing bulkhead 501 may be coupled to the internal surface of the first side plate 230 of the longitudinal member 200 by welding.

The width-direction member 300 on the left, the first side plate 230 on the left, the reinforcing bulkhead 501, the first side plate 230 on the right, and the width-direction member 300 on the right may be disposed in the width direction.

As an example, referring to FIG. 7, the reinforcing bulkhead 501 may be coupled to the internal surface of the first side plate 230 of the upper longitudinal unit 202 of the longitudinal member 200, and the upper width-direction unit 302 of the width-direction member 300 may be coupled to the internal surface of the first side plate 230 of the upper longitudinal unit 202 corresponding to a position to which the reinforcing bulkhead 501 is coupled.

As another example, referring to FIG. 8, the reinforcing bulkhead 501 may be coupled to the internal surface of the first side plate 230 of the lower longitudinal unit 201 of the longitudinal member 200, and the second lower width-direction unit 301 of the width-direction member 300 -2 may be coupled to the internal surface of the first side plate 230 of the lower longitudinal unit 201 corresponding to a position to which the reinforcing bulkhead 501 is coupled.

The reinforcing bulkhead 501 and the width-direction member 300 may have cross-sections having corresponding shapes. The reinforcing bulkhead 501 and the width-direction member 300 may be disposed in corresponding positions with the first side plate 230 of the longitudinal member 200 interposed therebetween.

For example, when the width-direction member 300 has a '⊏ shaped' cross-section, the reinforcing bulkhead 501 may have a '⊏ shaped' cross-section corresponding thereto.

For example, when the width-direction member 300 includes a second upper plate 310 and a pair of second side plates 330, and may include a '⊏ shaped' cross-section with an open lower portion, the reinforcing bulkhead 501 may have a '⊏ shaped' cross-section corresponding thereto.

The '⊏ shaped' cross-sectional portion of the width-direction member 300 and the '⊏ shaped' cross-sectional portion of the reinforcing bulkhead 501 may be disposed in corresponding positions with the first side plate 230 of the longitudinal member 200 therebetween. Accordingly, continuity of the cross-section may be maintained by the width-direction member 300 on the left, the first side plate 230 on the left, the reinforcing bulkhead 501, the first side plate 230 on the right, and the width-direction member 300 on the right, thereby resisting against impact load in the width direction.

The reinforcing bulkhead 501 and the width-direction member 300 may have a cross-section of a shape in which at least portions of the cross-section correspond to each other.

For example, when the width-direction member 300 has a '□ shaped' cross-section including a '⊏ shaped' cross-section, the reinforcing bulkhead 501 may have a '⊏ shaped' cross-section corresponding to the '⊏ shaped' cross-section of the width-direction member 300. The '⊏ shaped' cross-section of the width-direction member 300 and the '⊏ shaped' cross-section of the reinforcing bulkhead 501 may be disposed in corresponding positions with the first side plate 230 of the longitudinal member 200 interposed therebetween.

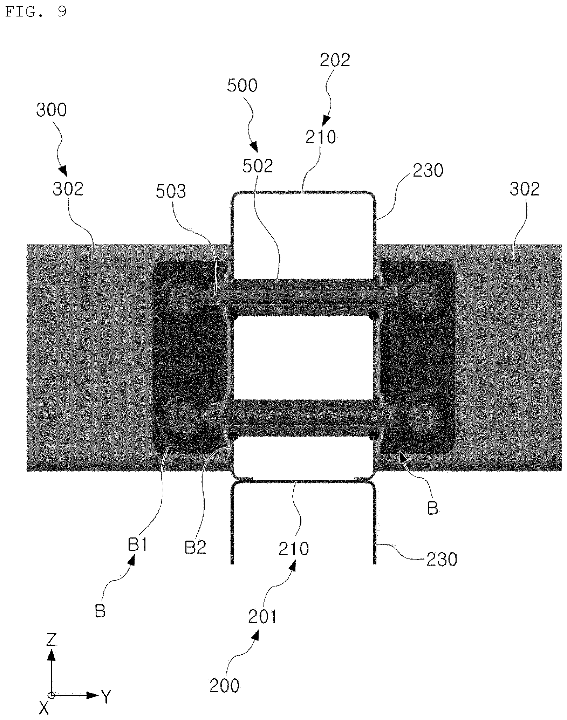

FIG. 9 is a diagram illustrating another embodiment in which a cross-section reinforcing member 500 of a battery case in the present invention is installed.

The width-direction member 300 may be coupled to the longitudinal member 200 by a connection bracket B. The cross-section reinforcing member 500 may be installed in the longitudinal member 200 disposed between adjacent connection brackets B, spaced apart from each other in the width direction, and may include a tubular reinforcing sleeve 502 supporting the adjacent connection bracket B.

The reinforcing sleeve 502 may assure continuity of the cross-section in the width direction between two connection brackets B connected to the width-direction member 300. The longitudinal member 200 including the reinforcing sleeve 502 installed therein may be disposed between two connection brackets B spaced apart from each other in the width direction.

The reinforcing sleeve 502 may support two width-direction internal surfaces of the longitudinal member 200. Also, the two connection brackets B and the longitudinal member 200 may be fastened by a reinforcing bolt member 503. Specifically, the reinforcing bolt member 503 may be fastened by penetrating the connection bracket B on the left, the longitudinal member 200, the reinforcing sleeve 502 and the connection bracket B on the right.

The first bracket B1 of the connection bracket B may be coupled to the width-direction member 300 by bolt-fastening or welding, and the second bracket B2 of connection bracket B may be coupled to the reinforcing bolt member 503 together with the longitudinal member 200 and the reinforcing sleeve 502.

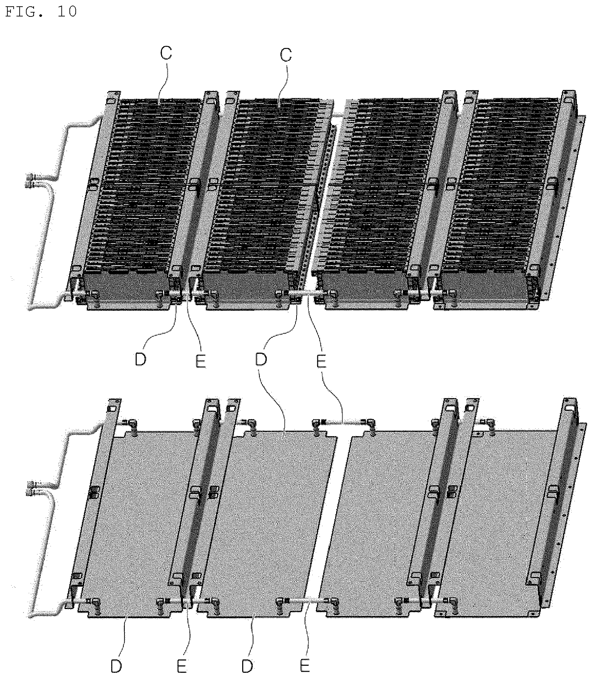

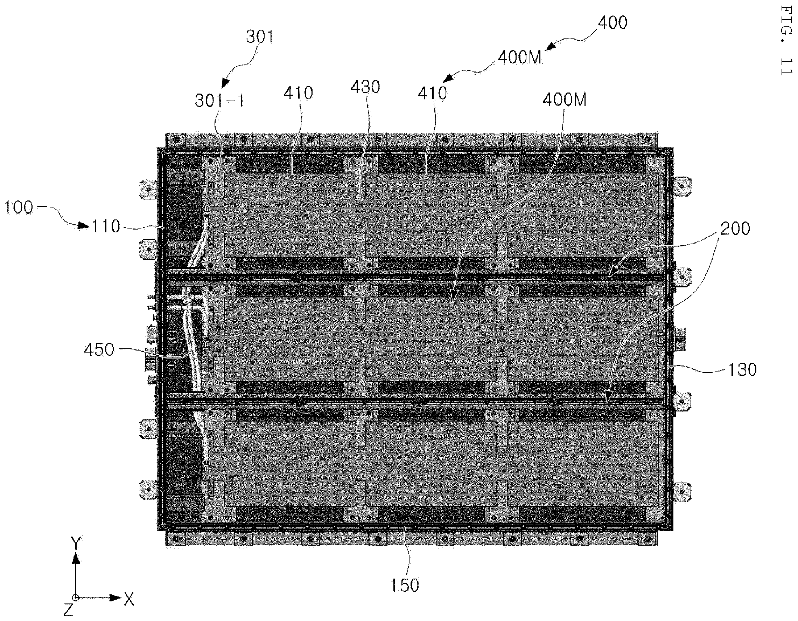

FIG. 10 is a diagram illustrating a cooling plate D of a battery case of a comparative example as compared to a battery case in the present invention. FIG. 11 is a diagram illustrating a cooling panel 400 of a battery case according to an embodiment of the present invention as compared to the comparative example in FIG. 10.

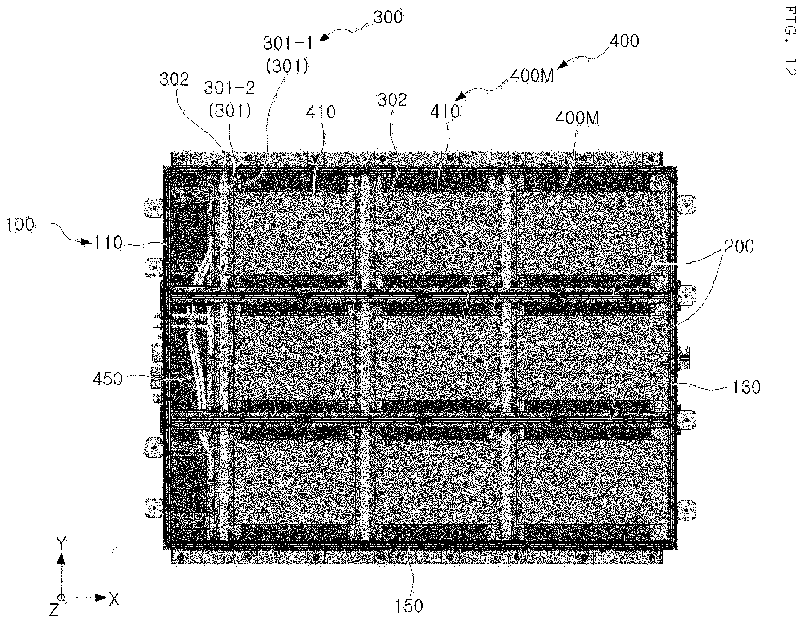

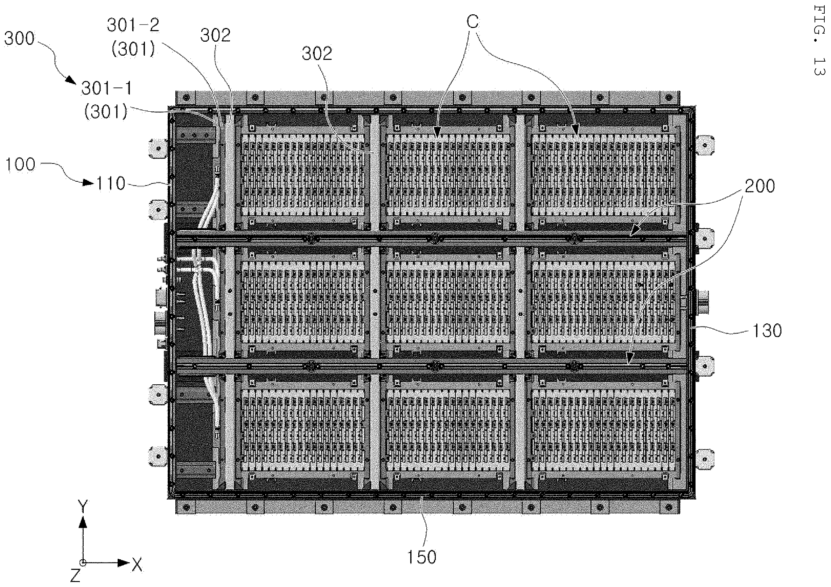

FIG. 12 is a diagram illustrating a state in which an upper width-direction unit 302 is additionally installed in FIG. 11. FIG. 13 is a diagram illustrating a state in which a battery module C is installed between a longitudinal member 200 and a width-direction member 300 in FIG. 12.

In the cooling panel 400, unit cooling panels 400M may be disposed in a unit space formed between adjacent longitudinal members 200 spaced apart from each other in the width direction or formed between the longitudinal unit and the side frame 100 spaced apart from each other in the width direction.

The unit space may be formed between two longitudinal members 200 spaced apart from each other in the width direction or between the longitudinal unit and the side frame 100 spaced apart from each other in the width direction.

The front frame 110 of the side frame 100 may be disposed on a front side of the unit space, and the front frame 110 of the side frame 100 may be disposed on a rear side.

Two longitudinal units may be spaced apart from each other in the width direction on a side surface of the unit space, or a longitudinal unit may be disposed on one side surface of a unit space, and a side-surface frame 150 may be disposed on the other side surface of the unit space and may be spaced apart from the longitudinal unit and in the width direction.

That is, the unit space may be surrounded by the front frame 110, a pair of longitudinal units, and the rear frame 130, or may be surrounded by the front frame 110, a longitudinal unit, the side-surface frame 150, and the rear frame 130.

The unit cooling panel 400M may be installed in the length direction across an internal portion of the side frame 100. The unit cooling panel 400M may be disposed on a lower side of the battery module C and may cool the battery module C. The unit cooling panel 400M may receive cold air by connecting to the cooling line 450. The unit cooling panel 400M may be installed individually in the unit space.

For example, in the side frame 100, two longitudinal members 200 may be spaced apart from each other in the width direction, and three unit spaces may be spaced apart from each other in the width direction. Three unit cooling panels 400M may be installed in three unit spaces. In other words, the unit cooling panels 400M formed integrally may be installed in the unit space.

The cooling panel 400 may include three unit cooling panels 400M, and the three unit cooling panels 400M may be spaced apart from each other in the width direction.

When a single unit cooling panel 400M is disposed between two longitudinal members 200 spaced apart from each other in the width direction, and a single unit cooling panel 400M is disposed between the side frame 100 on the left side in the width direction and the longitudinal member 200, the unit cooling panel 400M may be disposed between the longitudinal unit and the side frame 100 on the right side of the width direction, and three unit cooling panels 400M may be installed.

In this specification, three unit cooling panels 400M are illustrated and described to be installed, but an embodiment thereof is not limited thereto, and two or four or more unit cooling panels 400M may be formed.

When the cooling panel 400 is installed throughout the battery case and the cooling water flows throughout the entire battery case, there is a problem in that the cooling flow path may be lengthened, such that a cooling temperature loss may increase, and cooling performance may deteriorate.

The cooling panel 400 may improve cooling performance by preventing the cooling flow path from being excessively lengthened by installing the unit cooling panel 400M individually in the unit space, and may reduce the size of the unit cooling panel 400M such that there may be the effect of allowing molding and assembly of the unit cooling panel 400M to be easily performed by reducing the spring-back phenomenon of the unit cooling panel 400M occurring when molding the unit cooling panel 400M.

The unit cooling panel 400M may include a single member installed throughout the plurality of width-direction members 300 spaced apart from each other in the length direction in the side frame 100.

FIG. 10 is a diagram illustrating a cooling plate D of a battery case of a comparative example as compared to a battery case in the present invention. FIG. 11 is a diagram illustrating a cooling panel 400 of a battery case according to an embodiment of the present invention as compared to the comparative example in FIG. 10.

Referring to FIG. 10, in the comparative example, differently from the embodiment of the present invention, a divided cooling plate D may need to be installed, and an additional tube structure E may be necessary to connect a flow path of the cooling plate D in each zone. Also, in order to connect the tube structure E, a space for the flow path to pass through may need to be assured in the upper end portion of the width-direction member 300 or the flow path may need to be assured by drilling a hole in the width-direction member 300, which may be problematic. Accordingly, the comparative example has structural problems in terms of increasing battery capacity in a limited space and protecting from external impact.

Referring to FIG. 11, as in the comparative example, the unit cooling panel 400M may be configured as a single unit installed across a plurality of width-direction members 300 spaced apart from each other in the length direction in the side frame 100, differently from the comparative example, it may not be necessary to install a plurality of cooling plates D divided in the unit space, and no additional tube structure may be necessary to connect the flow path of cooling plate D in each zone, such that there may be the effect of maximizing battery capacity and stably protecting from external impact.

The unit cooling panel 400M may include a cooling module plate 410 and a connection module plate 430.

A plurality of cooling module plates 410 may be installed and spaced apart from each other in the length direction and may cool the battery module C.

The connection module plate 430 may connect two cooling module plates 410 to each other.

The cooling module plate 410 and the connection module plate 430 may be manufactured integrally as a single metal plate such as steel material.

The battery module C may be disposed between two adjacent width-direction members 300 spaced apart from each other in the length direction.

The cooling module plate 410 may be disposed between two adjacent width-direction members 300 spaced apart from each other in the length direction and may cool the battery module C, and the connection module plate 430 may be installed with a smaller width than the cooling module plate 410 and may be disposed throughout in a region between the first lower width-direction unit 301-1 of the width-direction member 300 and the second lower width-direction unit 301-2 of the width-direction member 300.

The connection module plate 430 may be installed with a smaller width than the cooling module plate 410, thereby reducing transfer of cold air to the width-direction member 300 while connecting two cooling module plates 410.

Also, although the connection module plate 430 is installed with a smaller width than the cooling module plate 410, the connection module plate 430 may be installed between the first lower width-direction unit 301-1 and the second lower width-direction unit 301-2, in which the connection module plate 430 is coupled in the height direction, such that rigidity may be reinforced by the first lower width-direction unit 301-1 and the second lower width-direction unit 301-2, and problems such as damage to the connection module plate 430 may not occur.

For example, the connection module plate 430 may be disposed to fit perfectly between the first lower width-direction unit 301-1 and the second lower width-direction unit 301-2.

In another example, the partial region of the connection module plate 430 may be installed throughout a region between the first lower width-direction unit 301-1 and the second lower width-direction unit 301-2, and the other partial region of the connection module plate 430 may be disposed externally of the first lower width-direction unit 301-1 and the second lower width-direction unit 301-2.

For example, the cooling panel 400 may be installed across four width-direction members 300 spaced apart from each other in the length direction. The cooling panel 400 may have a shape in which three cooling module plates 410 are connected to each other, and the cooling module plate 410 may be disposed between two adjacent width-direction members 300. However, the cooling panel 400 may not be divided by the width-direction member 300.

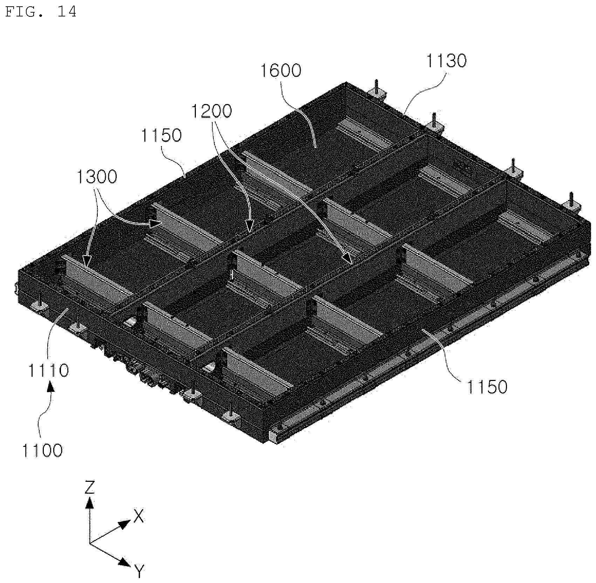

Hereinafter, with reference to FIGS. 14 to 17, components included in a battery case according to another embodiment of the present invention will be described in detail.

FIG. 14 is a perspective diagram illustrating a battery case according to another embodiment of the present invention. FIG. 15 is a plan diagram illustrating a small-sized battery case 1 and a large-sized battery case 2.

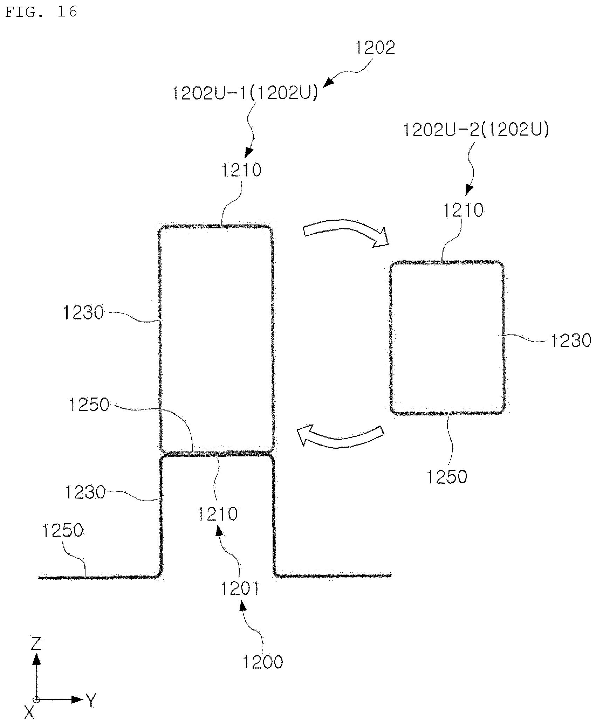

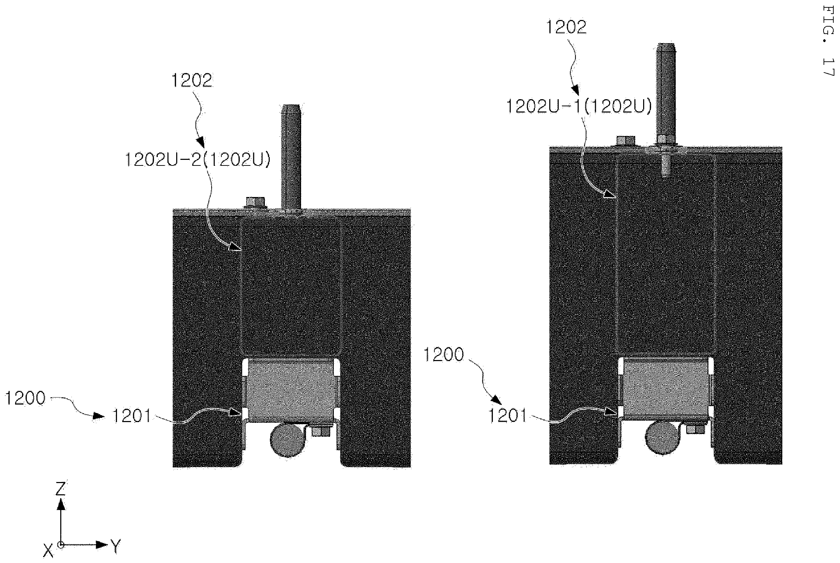

FIG. 16 is a cross-sectional diagram illustrating a longitudinal member 1200 including an upper longitudinal unit 1202 in which a plurality of first variable units 1202U are replaced. FIG. 17 is a diagram illustrating an example to which FIG. 3 is applied.

In order to assure required battery capacity as a size of the electric vehicle changes, in the small-sized battery case 1 and the large-sized battery case 2, the size of the battery case in the length direction (X-axis), the width direction (Y-axis), and the height direction (Z-axis) may change. Accordingly, the size of the components included in the battery case in the present invention, such as the longitudinal member 1200 and the width-direction member 1300, may also change.

In this case, in the case of changing the size of the battery case in the length direction and the width direction, the length direction extension length, it may be easily responded to by changing the extension length of the longitudinal member 1200 in the length direction, the extension length of the width-direction member 1300 in the width direction without changing cross-sectional shapes of the longitudinal member 1200 and the width-direction member 1300.

In the case of changing the size of the battery case in the height direction, it may inevitably be necessary to change the cross-sectional shapes of the longitudinal member 1200 and the width-direction member 1300.

Accordingly, in the battery case in the present invention, the longitudinal member 1200 and the width-direction member 1300 are not configured as a single component, and a plurality of the components may be designed to be distinct from each other in the height direction and may be coupled to each other in the height direction, such that it may easily respond to changes in the size of the battery case in the height direction.

The battery case according to an embodiment of the present invention may include a side frame 1100, a longitudinal member 1200, and a width-direction member 1300.

The side frame 1100 may be installed to surround a side surface. For example, an internal portion of the side frame 1100 may have a hollow quadrangular shape on a plane, and the width-direction member 1300, the longitudinal member 1200, and the cooling panel 1400 may be disposed in the side frame 1100.

The longitudinal member 1200 may extend in the length direction in the side frame 1100 and may be installed across the internal portion of the side frame 1100. The longitudinal member 1200 may extend in the length direction, and a plurality of the longitudinal members 1200 may be spaced apart from each other in the width direction.

The longitudinal member 1200 may be installed in the side frame 1100 and may extend in the length direction such that both ends may be connected to the side frame 1100. For example, the longitudinal member 1200 may support the front frame 1110 and rear frame 1130 opposing the side frame 1100. For example, in the side frame 1100, two longitudinal members 1200 may be spaced apart from each other in the width direction.

The longitudinal member 1200 may have components such as a first upper plate 1210, a first side plate 1230, and a first lower plate 1250. The upper longitudinal unit 1202 and the lower longitudinal unit 1201, which will be described later, may have components such as the first upper plate 1210, the first side plate 1230, and the first lower plate 1250, respectively.

The width-direction member 1300 may extend in the width direction in the side frame 1100 and may be connected to intersect with the longitudinal member 1200.

The width-direction member 1300 may be installed in the side frame 1100, may extend in the width direction, and a plurality of the width-direction member 1300 may be installed and spaced apart from each other in the length direction.

A plurality of width-direction units may be coupled to each other in the height direction, and the cooling panel 1400 may be installed by penetrating a region between adjacent width-direction units coupled to each other in the height direction.

The width-direction unit may have components such as a second upper plate 1310, a second side plate 1330, and a second lower plate 1350. A first lower width-direction unit 1301-1, a second lower width-direction unit 1301-2, and an upper width-direction unit 1302 may include the second upper plate 1310, the second side plate 1330, and the second lower plate 1350, respectively, which will be described later.

The longitudinal member 1200 may include a lower longitudinal unit 1201 and an upper longitudinal unit 1202.

The lower longitudinal unit 1201 may be disposed on the lower side.

The upper longitudinal unit 1202 may include a plurality of first variable units 1202U having different heights, and at least one of the plurality of first variable units 1202U may be coupled to an upper side of the lower longitudinal unit 1201.

The height of the longitudinal member 1200 of the upper longitudinal unit 1202 may be determined depending on a height of the first variable unit 1202U selectively coupled.

For example, in the large-sized battery case 12, a 1-1 variable unit 1202U-1 having a high height may be installed on an upper side of the lower longitudinal unit 1201, and in the small-sized battery case 11, a 1-2 variable unit 1202U-2 having a low height may be installed on the upper side of the lower longitudinal unit 1201.

For example, in the battery case in the present invention, in the small-sized battery case 11 and the large-sized battery case 12, the same components may be applied to the lower longitudinal unit 1201 of the longitudinal member 1200, and the first variable unit 1202U having a different height may be applied to the upper longitudinal unit 1202.

In the battery case in the present invention, as the same components are applied to the lower longitudinal unit 1201, the basic structure of the battery case may be maintained, and production efficiency may be improved by reducing component changes, and the size of the battery case may be freely changed.

In the battery case in the present invention, the lower longitudinal unit 1201 may be maintained and the height of the first variable unit 1202U coupled to the upper portion of the lower longitudinal unit 1201 may be selected, such that there may be the effect of easily responding to changes in the size of the battery case in the height direction.

The width-direction member 1300 may connect the adjacent longitudinal member 1200 or may connect the longitudinal member 1200 to the side frame 1100.

The width-direction member 1300 may support the adjacent longitudinal member 1200, or may support the side frame 1150 of the longitudinal member 1200 and the side frame 1100.

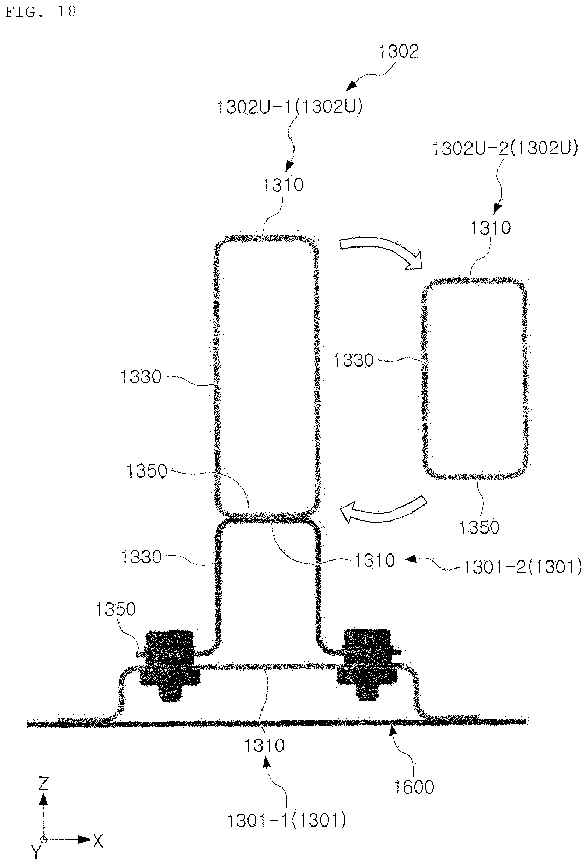

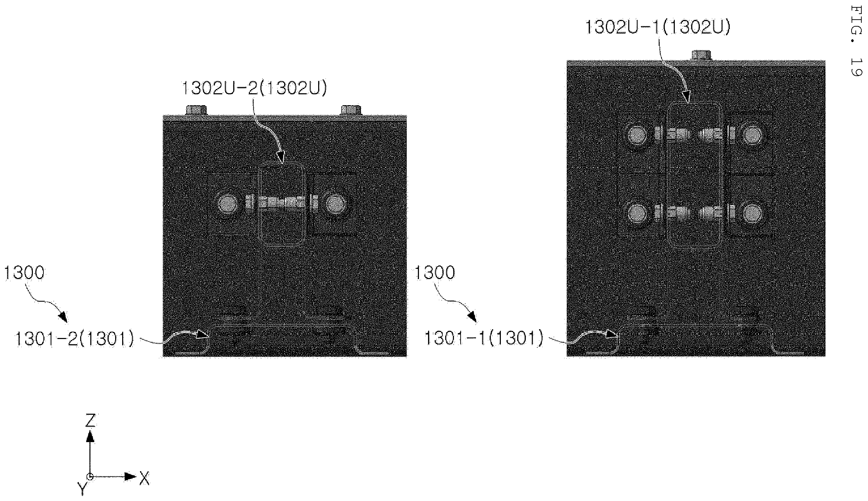

FIG. 18 is a cross-sectional diagram illustrating a width-direction member including an upper width-direction unit 1302 in which a plurality of second variable units 1302U are replaced. FIG. 19 is a diagram illustrating an example to which FIG. 18 is applied.

A width-direction member 1300 may include a lower width-direction unit 1301 and an upper width-direction unit 1302.

The lower width-direction unit 1301 may be disposed on a lower side.

The upper width-direction unit 1302 may include a plurality of second variable units 1302U having different heights, and at least one of the plurality of second variable units 1302U may be coupled to an upper side of the lower width-direction unit 1301.

The upper width-direction unit 1302 may determine a height of the width-direction member 1300 depending on a height of the second variable unit 1302U selectively coupled.

For example, in a large-sized battery case 12, a 2-1 variable unit 1302U-1 having a great height may be installed on the upper side of the lower width-direction unit 1301, and in a small-sized battery case 11, the 2-2 variable unit 1302U-2 having a low height may be installed on the upper side of lower width-direction unit 1301.

For example, in the battery case in the present invention, in the small-sized battery case 11 and the large-sized battery case 12, the same components may be applied to the lower width-direction unit 1301 of the longitudinal member 1200, and the second variable unit 1302U having a different height may be applied to the upper width-direction unit 1302.

In the battery case in the present invention, the lower width-direction unit 1301 may be maintained, and the height of the second variable unit 1302U, which is coupled to the upper portion of the lower width-direction unit 1301, may be selected, such that there may be the effect of easily responding to changes in the size of the battery case in the height direction.

In the battery case in the present invention, the heights of the lower longitudinal unit 1201 and the lower width-direction unit 1301, which are commonly used in the small-sized battery case 11 and the large-sized battery case 12, may be configured to correspond to each other. For example, the lower longitudinal unit 1201 and the lower width-direction unit 1301 may have the same height, and in this case, there may be an effect of efficiently responding to collision loads of the battery case.

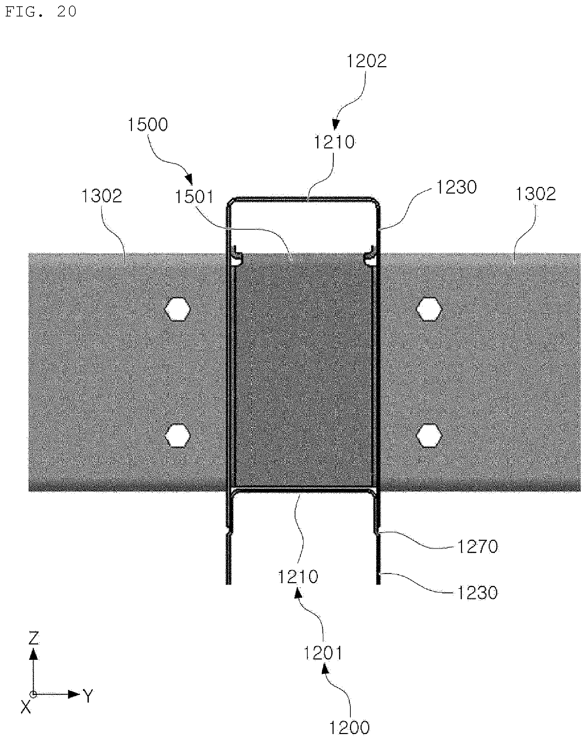

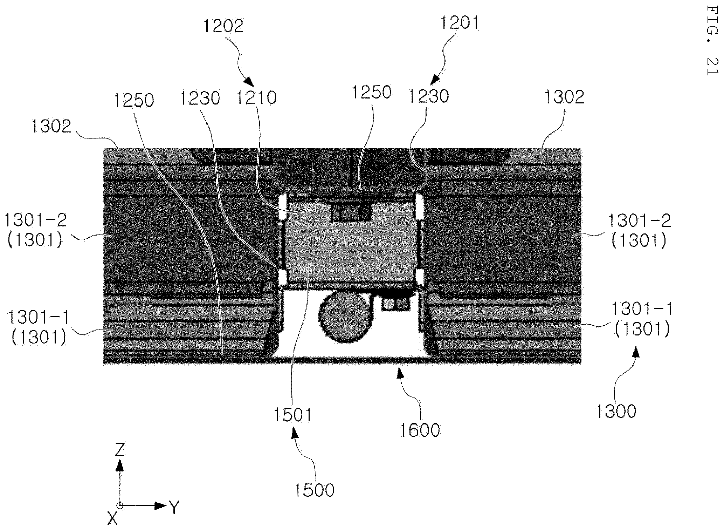

FIG. 20 is a diagram illustrating an embodiment in which a cross-section reinforcing member 1500 of a battery case in the present invention is installed. FIG. 21 is a diagram illustrating another embodiment in which a cross-section reinforcing member 1500 of a battery case in the present invention is installed.

The battery case may further include a cross-section reinforcing member 1500.

The cross-section reinforcing member 1500 may be installed in a longitudinal member 1200, may be disposed at a connection point at which the width-direction member 1300 is connected, and may support a width-direction internal surface of the longitudinal member 1200.

The cross-section reinforcing member 1500 may support two width-direction internal surfaces of the longitudinal member 1200.

The longitudinal member 1200 may extend in the length direction, and a hollow portion may be formed therein. The longitudinal member 1200 may have a hollow portion, which may be advantageous for reducing a weight, but buckling may occur due to impact load in the width direction, and the cross-section reinforcing member 1500 may reinforce the component.

The upper longitudinal unit 1202 may form a closed cross-section in which the first variable unit 1202U selected from among the plurality of first variable units 1202U is coupled to the upper side of the lower longitudinal unit 1201.

The upper longitudinal unit 1202 may include a '⊏ shaped' member having an open lower portion, and the open portion may be coupled to an upper side of the lower longitudinal unit 1201. In this case, a recessed step 1270 into which the lower portion of the upper longitudinal unit 1202 is inserted may be formed on the upper side of the lower longitudinal unit 1201. For example, the lower end portion of the upper longitudinal unit 1202 may be mounted on the recessed step 1270 of the lower longitudinal unit 1201, and the upper longitudinal unit 1202 and the lower longitudinal unit 1201 may be coupled to each other by welding.

The lower longitudinal unit 1201 may have a hat-shaped cross-section having an open lower portion, and the lower side may be coupled to the bottom plate 1600 and may form a closed cross-section with the bottom plate 1600.

The cross-section reinforcing member 1500 may be installed in the longitudinal member 1200 disposed between adjacent width-direction members 1300, spaced apart from each other in the width direction, and may include a reinforcing bulkhead 1501 supporting adjacent width-direction members 1300.

The reinforcing bulkhead 1501 may assure continuity of the cross-section in the width direction between two width-direction members 1300 spaced apart from each other in the width direction. The longitudinal member 1200 installed in the reinforcing bulkhead 1501 may be disposed between two width-direction members 1300 spaced apart from each other in the width direction.

The reinforcing bulkhead 1501 and the width-direction member 1300 may be disposed with the first side plate 1230 of the longitudinal member 1200 interposed therebetween. The reinforcing bulkhead 1501 may be coupled to an internal surface of the first side plate 1230 of the longitudinal member 1200, and the width-direction member 1300 may be coupled to an internal surface of the first side plate 1230 of the longitudinal member 1200 corresponding to a position to which the reinforcing bulkhead 1501 is coupled. For example, the reinforcing bulkhead 1501 may be coupled to the internal surface of the first side plate 1230 of the longitudinal member 1200 by welding.

The width-direction member 1300 on the left, the first side plate 1230 on the left, the reinforcing bulkhead 1501, the first side plate 1230 on the right, and the width-direction member 1300 on the right may be disposed in the width direction.

As an example, referring to FIG. 20, the reinforcing bulkhead 1501 may be coupled to an internal surface of the first side plate 1230 of the upper longitudinal unit 1202 of the longitudinal member 1200, and the upper width-direction unit 1302 of the width-direction member 1300 may be coupled to an internal surface of the first side plate 1230 of the upper longitudinal unit 1202 corresponding to a position to which the reinforcing bulkhead 1501 is coupled.

As another example, referring to FIG. 21, the reinforcing bulkhead 1501 may be coupled to the internal surface of the first side plate 1230 of the lower longitudinal unit 1201 of the longitudinal member 1200, and the second lower width-direction unit 1301-2 of the width-direction member 1300 may be coupled to the internal surface of the first side plate 1230 of the lower longitudinal unit 1201 corresponding to a position to which the reinforcing bulkhead 1501 is coupled.

The reinforcing bulkhead 1501 and the width-direction member 1300 may have cross-sections having corresponding shapes. The reinforcing bulkhead 1501 and the width-direction member 1300 may be disposed in corresponding positions with the first side plate 1230 of the longitudinal member 1200 interposed therebetween.

For example, when the width-direction member 1300 has a '⊏ shaped' cross-section, the reinforcing bulkhead 1501 may have a corresponding '⊏ shaped' cross-section.

For example, when the width-direction member 1300 includes a second upper plate 1310 and a pair of second side plates 1330, and may include a '⊏ shaped' cross-section with an open lower portion, the reinforcing bulkhead 1501 may have a corresponding '⊏ shaped' cross-section.

The '⊏ shaped' cross-sectional portion of the of the width-direction member 1300 and the '⊏ shaped' of cross-sectional portion of the reinforcing bulkhead 1501 may be disposed in corresponding positions with the first side plate 1230 of the longitudinal member 1200 interposed therebetween. Accordingly, continuity of the cross-section may be maintained with the width-direction member 1300 on the left, the first side plate 1230 on the left, the reinforcing bulkhead 1501, the first side plate 1230 on the right, and the width-direction member 1300 on the right, thereby stably resisting against impact load in the width direction.

The reinforcing bulkhead 1501 and the width-direction member 1300 may have cross-sections having a shape in which at least portions of the cross-section correspond to each other.

For example, when the width-direction member 1300 has a '□ shaped' cross-section including a '⊏ shaped' cross-section, the reinforcing bulkhead 1501 may have a '⊏ shaped' cross-section corresponding to the '⊏ shaped' cross-section of the width-direction member 1300. The '⊏ shaped' cross-section of the width-direction member 1300 and the '⊏ shaped' cross-section of the reinforcing bulkhead 1501 may be disposed in corresponding positions with the first side plate 1230 of the longitudinal member 1200 interposed therebetween.

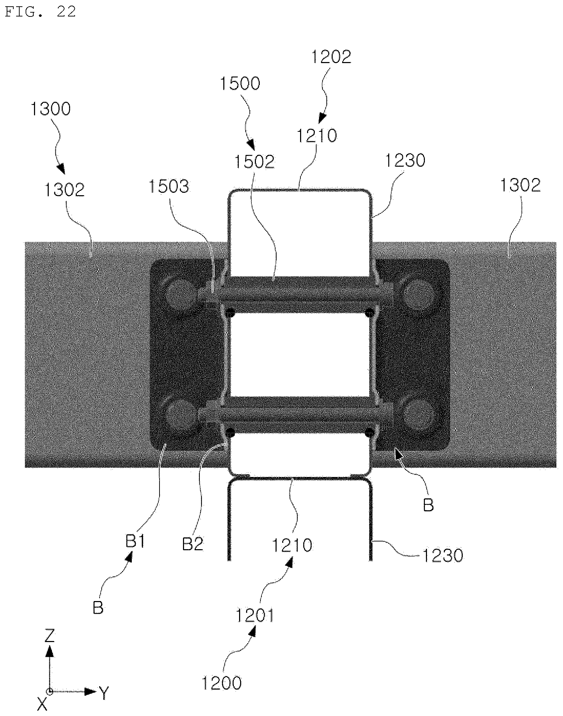

FIG. 22 is a diagram illustrating another embodiment in which a cross-section reinforcing member 1500 of a battery case in the present invention is installed.

The width-direction member 1300 may be coupled to the longitudinal member 1200 through a connection bracket B. The cross-section reinforcing member 1500 may be installed in the longitudinal member 1200 disposed between adjacent connection brackets B spaced apart from each other in the width direction, and may include a tubular reinforcing sleeve 1502 supporting the adjacent connection bracket B.

The reinforcing sleeve 1502 may assure continuity of the cross-section in the width direction between the two connection brackets B connected to the width-direction member 1300. The longitudinal member 1200 including the reinforcing sleeve 1502 installed therein may be disposed between two connection brackets B spaced apart from each other in the width direction.

The reinforcing sleeve 1502 may support two width-direction internal surfaces of the longitudinal member 1200. Also, the two connection brackets B and the longitudinal member 1200 may be fastened by a reinforcing bolt member 1503. Specifically, the reinforcing bolt member 1503 may be fastened by penetrating the connection bracket B on the left, the longitudinal member 1200, the reinforcing sleeve 1502 and the connection bracket B on the right.

The first bracket B1 of the connection bracket B may be coupled to the width-direction member 1300 by bolt-fastening or welding, and the second bracket B2 of the connection bracket B may be coupled to the bolt reinforcing member 1503 together with the longitudinal member 1200 and the reinforcing sleeve 1502.

The battery case may further include a cooling panel 1400.

The width-direction member 1300 may have a plurality of width-direction units coupled to each other the height direction. The cooling panel 1400 may cool a battery module C by being installed through adjacent width-direction units coupled to each other in the height direction.

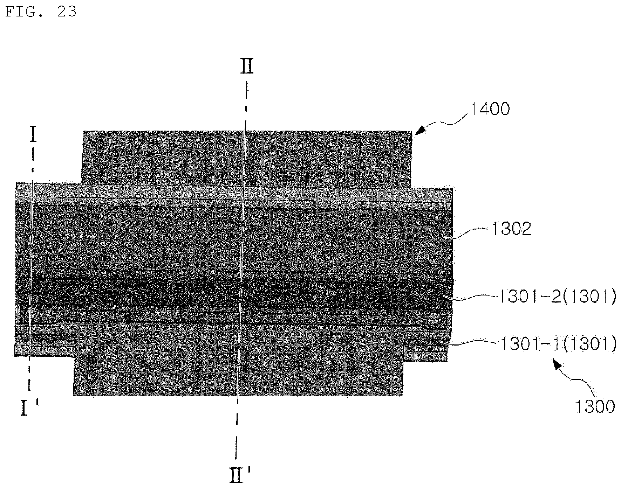

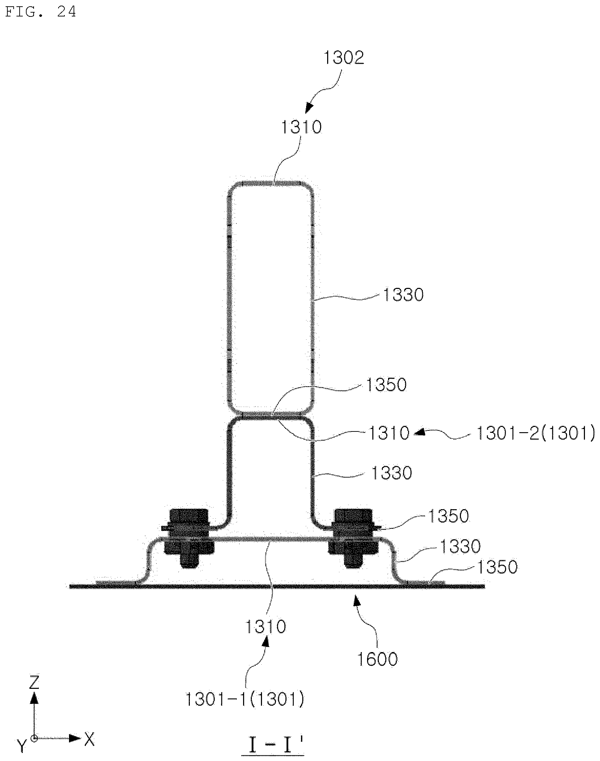

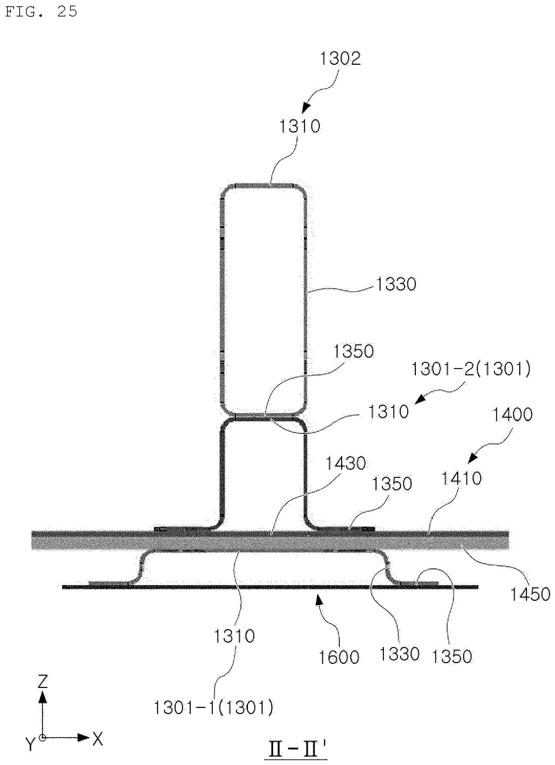

FIG. 23 is a diagram illustrating a width-direction member 1300 and a cooling panel 1400 in which a plurality of width-direction units are coupled to each other in a height direction. FIG. 24 is a cross-sectional diagram in the direction I-I' in FIG. 23. FIG. 25 is a cross-sectional diagram in the direction II-II' in FIG. 23.

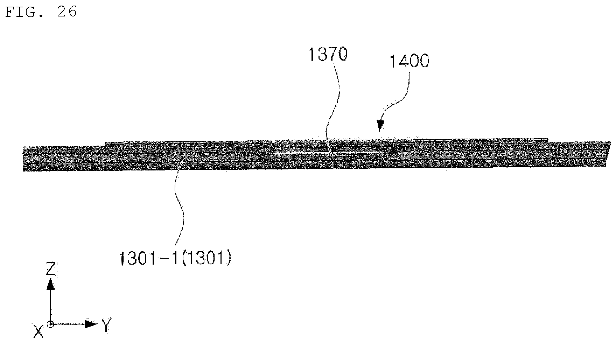

FIG. 26 is a diagram illustrating a state in which a cooling panel 1400 is installed on an upper side of a first lower width-direction unit 1301-1.

The width-direction member 1300 may include a first lower width-direction unit 1301-1 and a second lower width-direction unit 1301-2.

The first lower width-direction unit 1301-1 may be disposed on a lower side of the cooling panel 1400 and may have a form bead 1370 through which the cooling panel 1400 and the cooling line 1450 cooling the cooling panel 1400 penetrates.

A lower side of the first lower width-direction unit 1301-1 may be coupled to the bottom plate 1600, and the cooling panel 1400 and the cooling line 1450 cooling the cooling panel 1400 may be disposed on the form bead 1370 formed on an upper side.

The first lower width-direction unit 1301-1 may include a second upper plate 1310, a pair of second side plates 1330, and a pair of second lower plates 1350. For example, the second lower plate 1350 may be coupled to the bottom plate 1600 by welding. In the first lower width-direction unit 1301-1, the second upper plate 1310, a pair of second side plates 1330, and a pair of second lower plates 1350 may form a hat-shaped cross-section.

The second lower width-direction unit 1301-2 may be disposed on an upper side of the cooling panel 1400 and may be coupled to the first lower width-direction unit 1301-1.

Referring to FIG. 24, in the portion in which the cooling panel 1400 is not disposed, the second lower width-direction unit 1301-2 and the first lower width-direction unit 1301-1 may be coupled to each other by a method such as coupling by bolts.

Referring to FIG. 25, the second lower width-direction unit 1301-2 may be disposed on an upper side of the first lower width-direction unit 1301-1 with the cooling panel 1400 interposed therebetween, and the first lower width-direction unit 1301-1, the cooling panel 1400, and the second lower width-direction unit 1301-2 may be connected to each other by bolts.

The second lower width-direction unit 1301-2 may include a second upper plate 1310, a pair of second side plates 1330, and a pair of second lower plates 1350. For example, the second lower plate 1350 may be coupled to the second upper plate 1310 of the first lower width-direction unit 1301-1 by a method such as coupling by bolts. In the second lower width-direction unit 1301-2, the second upper plate 1310, a pair of second side plates 1330, and a pair of second lower plates 1350 may form a hat-shaped cross-section.

The first lower width-direction unit 1301-1 may have a hat-shaped cross-section having an open lower portion, the lower side may be coupled to the bottom plate 1600 and may form a closed cross-section with the bottom plate 1600, and the first lower width-direction unit 1301-1 may have a cooling panel 1400 on the upper side and a form bead 1370 through which the cooling line 1450 cooling the cooling panel 1400 penetrates.

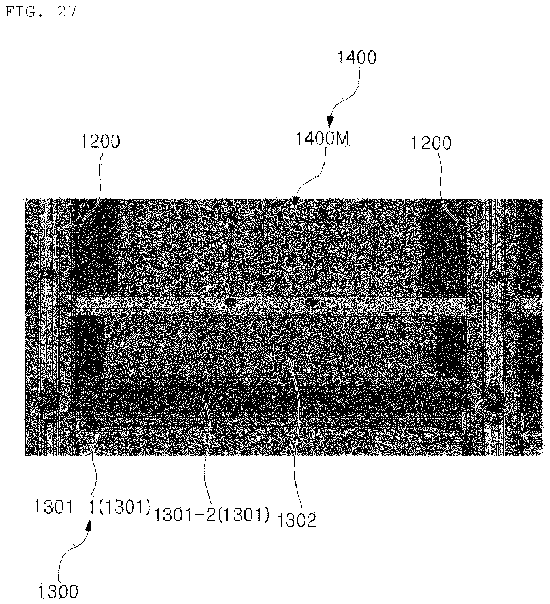

FIG. 27 is a diagram illustrating details of a portion in which a width-direction member 1300 is coupled to a longitudinal member 1200.

The width-direction member 1300 may further include an upper width-direction unit 1302.

The upper width-direction unit 1302 may be coupled to an upper side of the second lower width-direction unit 1301-2 and may include a plurality of second variable units 1302U having different heights, and at least one of the plurality of second variable units 1302U may be coupled to the upper side of the lower width-direction unit 1301, and the upper width-direction unit 1302 may be coupled to the longitudinal member 1200 by a connection bracket B.

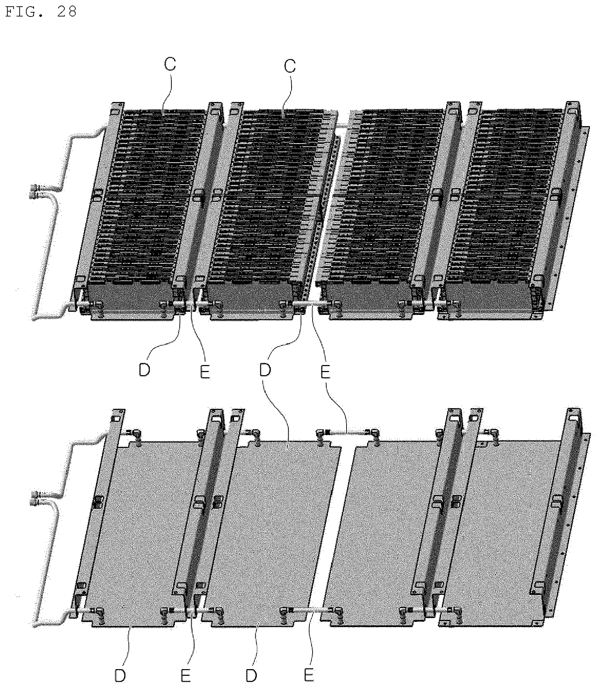

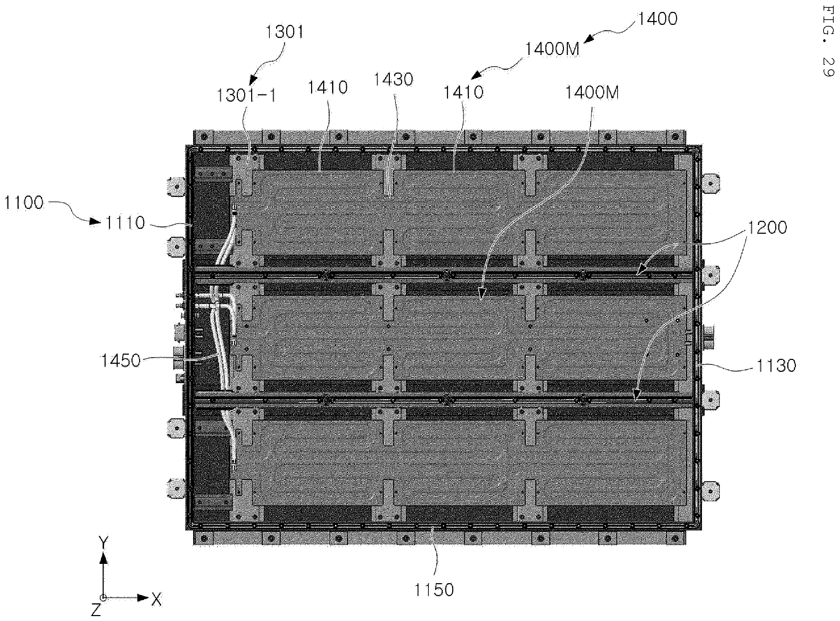

FIG. 28 is a diagram illustrating a cooling plate D of a battery case of a comparative example as compared to a battery case in the present invention. FIG. 29 is a diagram illustrating a cooling panel 1400 of a battery case according to an embodiment of the present invention as compared to the comparative example in FIG. 28.

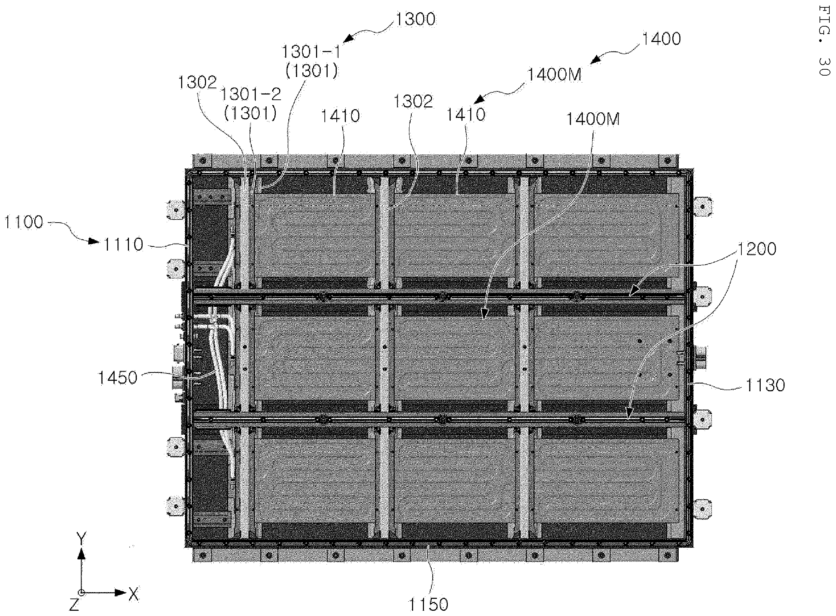

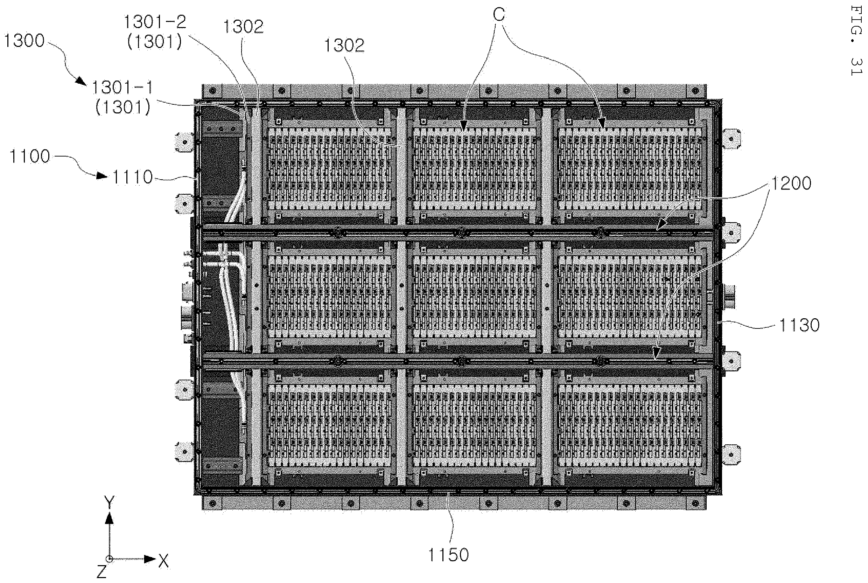

FIG. 30 is a diagram illustrating a state in which an upper width-direction unit 1302 is additionally installed in FIG. 29. FIG. 31 is a diagram illustrating a state in which a battery module is installed between the longitudinal member 1200 and the width-direction member 1300 in FIG. 30.

In the cooling panel 1400, the unit cooling panel 1400M may be disposed in a unit space formed between adjacent longitudinal members 1200 spaced apart from each other in the width direction or between the longitudinal member 1200 and the side frame 1100 spaced apart from each other in the width direction.

The unit space may be formed between two longitudinal members 1200 spaced apart from each other in the width direction or between the longitudinal unit and the side frame 1100 spaced apart from each other in the width direction.

The front frame 1110 of the side frame 1100 may be disposed on a front side of the unit space, and the front frame 1110 of the side frame 1100 may be disposed on a rear side.

On the side surface of the unit space, two longitudinal units may be spaced apart from each other in the width direction, or a longitudinal unit may be disposed on one side surface of the unit space, and the side frame 1150 may be disposed on the other side surface of the unit space and may be spaced apart from the longitudinal unit in the width direction.

That is, the unit space may be surrounded by a front frame 1110, a pair of longitudinal units, and a rear frame 1130, or may be surrounded by the front frame 1110, the longitudinal unit, the side frame 1150, and the rear frame 1130.

The unit cooling panel 1400M may be installed in the length direction across an internal portion of the side frame 1100. The unit cooling panel 1400M may be disposed on a lower side of battery module C and may cool a battery module C. The unit cooling panel 1400M may receive cold air by connecting to the cooling line 1450. The unit cooling panel 1400M may be installed individually in the unit space.

For example, in the side frame 1100, two longitudinal members 1200 may be spaced apart from each other in the width direction, and three unit spaces may be spaced apart from each other in the width direction. Three unit cooling panels 1400M may be installed in three unit spaces. That is, the unit cooling panel 1400M integrally formed may be installed in the unit space.

The cooling panel 1400 may include three unit cooling panels 1400M, and the three unit cooling panels 1400M may be spaced apart from each other in the width direction.

When a single unit cooling panel 1400M is disposed between two longitudinal members 1200 spaced apart from each other in the width direction, and a single unit cooling panel 1400M is disposed between the side frame 1100 on the left side of the width direction and the longitudinal member 1200, a single unit cooling panel 1400M may be disposed between the longitudinal unit and the side frame 1100 on the right side in the width direction, and three unit cooling panels 1400M may be installed.

In this specification, three unit cooling panels 1400M are illustrated and described to be installed, but an embodiment thereof is not limited thereto, and two or four or more unit cooling panels 1400M may be formed.

When the cooling panel 1400 is installed throughout the battery case and the cooling water flows throughout the entire battery case, the cooling flow path may be lengthened, a cooling temperature loss may increase, and cooling performance may deteriorate, which may be problematic.

In the cooling panel 1400, the unit cooling panel 1400M may be installed individually in each unit space, such that cooling performance may be improved by preventing the cooling flow path from being excessively lengthened, and by reducing the size of the unit cooling panel 1400M, the spring-back phenomenon of the unit cooling panel 1400M occurring during molding of the unit cooling panel 1400M may be reduced, such that there may be the effect of allowing molding and assembly of the unit cooling panel 1400M to be easily performed.

The unit cooling panel 1400M may include a single member installed throughout the plurality of width-direction members 1300 spaced apart from each other in the length direction in the side frame 1100.

Referring to FIG. 28, in the comparative example, differently from the embodiment of the present invention, a divided cooling plate D may need to be installed, and an additional tube structure E may be necessary to connect a flow path of the cooling plate D in each zone. Also, in order to connect the tube, a space for the flow path to pass through may need to be assured in the upper end portion of the width-direction member 1300 or the flow path may need to be assured by drilling a hole in the width-direction member 1300, which may be problematic. Accordingly, the comparative example has structural problems in terms of increasing battery capacity in a limited space and protecting from external impact.

Referring to FIG. 29, as in the comparative example, the unit cooling panel 400M may be configured as a single unit installed across a plurality of width-direction members 1300 spaced apart from each other in the length direction in the side frame 1100, differently from the comparative example, it may not be necessary to install a plurality of cooling plates D divided in the unit space, and no additional tube structure may be necessary to connect the flow path of the cooling plate D in each zone, such that there may be the effect of maximizing battery capacity and stably protecting from external impact.

The unit cooling panel 1400M may include a cooling module plate 1410 and a connection module plate 1430.

A plurality of cooling module plates 1410 may be spaced apart from each other in the length direction to cool battery module C.

The connection module plate 1430 may connect two cooling module plates 1410 to each other.

The cooling module plate 1410 and the connection module plate 1430 may be manufactured integrally as a single metal plate such as a steel material.

The cooling module plate 1410 may be disposed between adjacent width-direction members 1300 spaced apart from each other in the length direction and may cool battery module C, and the connection module plate 1430 may be installed with a smaller width than the cooling module plate 1410 and may be disposed between the first lower width-direction unit 1301-1 of the width-direction member 1300 and the second lower width-direction unit 1301-2 of the width-direction member 1300.

The battery module C may be disposed between two adjacent width-direction members 1300 spaced apart from each other in the length direction.

As the connection module plate 1430 is installed with a smaller width than the cooling module plate 1410, transfer of cold air to the width-direction member 1300 may be reduced while connecting two cooling module plates 1410 to each other.

Also, although the connection module plate 1430 is installed with a smaller width than the cooling module plate 1410, the connection module plate 1430 may be installed between the first lower width-direction unit 1301-1 and the second lower width-direction unit 1301-2 coupled to each other in the height direction, such that rigidity may be reinforced by the first lower width-direction unit 1301-1 and the second lower width-direction unit 1301-2, such that problems such as damage to the connection module plate 1430 may not occur.

For example, the connection module plate 1430 may be disposed to fit perfectly between the first lower width-direction unit 1301-1 and the second lower width-direction unit 1301-2.

In another example, a partial region of the connection module plate 1430 may be installed between the first lower width-direction unit 1301-1 and the second lower width-direction unit 1301-2, and another partial region of the connection module plate 1430 may be disposed externally of the first lower width-direction unit 1301-1 and the second lower width-direction unit 1301-2.

For example, the cooling panel 1400 may be installed across four width-direction members 1300 spaced apart from each other in the length direction. The cooling panel 1400 may have a shape in which three cooling module plates 1410 are connected, and the cooling module plate 1410 may be disposed between two adjacent width-direction members 1300. However, the cooling panel 1400 may not be divided by the width-direction member 1300.

Although the embodiment of the present invention has been described in detail above, the scope of the rights in the present invention is not limited thereto, and it is apparent for those with ordinary skill in the relevant technical field that various modifications and variations may be made without departing from the technical spirit in the present invention described in the claims.

### [REFERENCE NUMERAL]

| | | | |
|---|---|---|---|
| 100, 1100: | SIDE FRAME | 110, 1110: | FRONT FRAME |
| 130, 1130: | REAR FRAME | 150, 1150: | SIDE FRAME |
| 200, 1200: | LONGITUDINAL MEMBER | 201, 1201: | LOWER LONGITUDINAL UNIT |
| 202, 1202: | UPPER LONGITUDINAL UNIT | 210, 1210: | FIRST UPPER PLATE |
| 230, 1230: | FIRST SIDE PLATE | 250, 1250: | FIRST LOWER PLATE |
| 270, 1270: | RECESSED STEP | 300, 1300: | WIDTH-DIRECTION MEMBER |
| 301, 1301: | LOWER WIDTH-DIRECTION UNIT | 301-1, 1301-1: | FIRST LOWER WIDTH-DIRECTION UNIT |
| 301-2, 1301-2: | SECOND LOWER WIDTH-DIRECTION UNIT | | |
| 302, 1302: | UPPER WIDTH-DIRECTION UNIT | | |
| 310, 1310: | SECOND UPPER PLATE | 330, 1330: | SECOND SIDE |
| | PLATE | | |
| 350, 1350: | SECOND LOWER PLATE | 370. 1370: | FORM BEAD |
| 400, 1400: | COOLING PANEL | 400M, 1400M: | UNIT COOLING PANEL |
| 410, 1410: | COOLING MODULE PLATE | 430, 1430: | CONNECTION MODULE PLATE |
| 450, 1450: | COOLING LINE | 500, 1500: | CROSS-SECTION REINFORCING MEMBER |
| 501, 1501: | REINFORCING BULKHEAD | 502, 1502: | REINFORCING SLEEVE |
| 503, 1503: | REINFORCING BOLT MEMBER | 600, 1600: | BOTTOM PLATE |
| B: | CONNECTION BRACKET | B1: | FIRST BRACKET |
| B2: | SECOND BRACKET | C: | BATTERY MODULE |
| D: | COOLING PLATE | E: | TUBE STRUCTURE |

## Claims

1. A battery case, comprising:
a side frame;
a longitudinal member disposed in the side frame and extending in a length direction;
a width-direction member disposed in the side frame, extending in a width direction, connected to intersect with the longitudinal member, and including a first lower width-direction unit and a second lower width-direction unit disposed to overlap each other in a height direction; and
a cooling panel disposed on an upper side of the first lower width-direction unit and cooling the battery module.

2. A battery case, comprising:
a side frame;
a longitudinal member extending in the side frame in a length direction; and
a width-direction member extending in the side frame in a width direction and connected to intersect with the longitudinal member,
wherein the longitudinal member includes:
a lower longitudinal unit disposed on a lower side; and
an upper longitudinal unit including a plurality of first variable units having different heights, wherein at least one of the plurality of first variable units is coupled to an upper side of the lower longitudinal unit.

3. The battery case of claim 1 or 2, wherein the width-direction member connects adjacent longitudinal members to each other or connects the longitudinal member to the side frame.

4. The battery case of claim 2, further comprising:
a first lower width-direction unit and a second lower width-direction unit disposed to overlap each other in a height direction; and
a cooling panel disposed on an upper side of the first lower width-direction unit and cooling the battery module.

5. The battery case of claim 1 or 4,
wherein the first lower width-direction unit is disposed on a lower side of the cooling panel and has a form bead through which the cooling panel penetrates, and
wherein the second lower width-direction unit is disposed on an upper side of the cooling panel and is coupled to the first lower width-direction unit.

6. The battery case of claim 5, wherein the first lower width-direction unit has a hat-shaped cross-section having an open lower portion, and a lower side thereof is coupled to a bottom plate and forms a closed cross-section with a bottom plate.

7. The battery case of claim 5, wherein the width-direction member further includes an upper width-direction unit coupled to an upper side of the second lower width-direction unit and coupled to the longitudinal member by a connection bracket.

8. The battery case of claim 1, wherein the longitudinal member includes:
a lower longitudinal unit having a hat-shaped cross-section having an open lower portion, and a lower side coupled to a bottom plate and forming a closed cross-section with the bottom plate; and
an upper longitudinal unit coupled to an upper side of the lower longitudinal unit and forming a closed cross-section.

9. The battery case of claim 1 or 2, further comprising:
a cross-section reinforcing member installed in the longitudinal member, disposed at a connection point to which the width-direction member is connected, and supporting a width-direction internal surface of the longitudinal member.

10. The battery case of claim 9, wherein the cross-section reinforcing member is installed in the longitudinal member disposed between the adjacent width-direction members spaced apart from each other in the width direction, and includes a reinforcing bulkhead supporting the adjacent width-direction members.

11. The battery case of claim 10, wherein the reinforcing bulkhead and the width-direction member have cross-sections having shapes of which at least portions correspond to each other.

12. The battery case of claim 9,
wherein the width-direction member is coupled to the longitudinal member by a connection bracket, and
wherein the cross-section reinforcing member is installed in the longitudinal member disposed between the adjacent connection brackets spaced apart from each other in the width direction, and includes a tubular reinforcing sleeve supporting the adjacent connection brackets.

13. The battery case of claim 1 or 4, wherein, in the cooling panel, unit cooling panels are respectively disposed in unit spaces formed between the adjacent longitudinal members spaced apart from each other in the width direction or formed between the longitudinal unit and the side frame spaced apart from each other in the width direction.

14. The battery case of claim 13, wherein the unit cooling panel includes a single member installed throughout the plurality of width-direction members spaced apart from each other in the length direction in the side frame.

15. The battery case of claim 13, wherein the unit cooling panel includes:
a plurality of cooling module plates installed and spaced apart from each other in the length direction and cooling the battery module; and
a connection module plate connecting the adjacent cooling module plates to each other.

16. The battery case of claim 15,
wherein the cooling module plate is disposed between the adjacent width-direction members spaced apart from each other in the length direction and cools the battery module, and
wherein the connection module plate is installed with a width smaller than that of the cooling module plate and is disposed throughout in a region between the first lower width-direction unit of the width-direction member and the second lower width-direction unit of the width-direction member.

17. The battery case of claim 2, wherein the width-direction member includes:
a lower width-direction unit disposed on a lower side; and
an upper width-direction unit including a plurality of second variable units having different heights, wherein at least one of the plurality of second variable units is coupled to an upper side of the lower width-direction unit.

18. The battery case of claim 2,
wherein the lower longitudinal unit has a hat-shaped cross-section having an open lower portion, and a lower side thereof is coupled to a bottom plate and forms a closed cross-section with the bottom plate, and
wherein, in the upper longitudinal unit, the first variable unit selected from among the plurality of first variable units is coupled to an upper side of the lower longitudinal unit and forms a closed cross-section.

19. The battery case of claim 5,
wherein the width-direction member further includes an upper width-direction unit coupled to an upper side of the second lower width-direction unit, and including a plurality of second variable units having different heights, where at least one of the plurality of second variable units is coupled to an upper side of the lower width-direction unit, and
wherein the upper width-direction unit is coupled to the longitudinal member by a connection bracket.
